# EUROPÄISCHE PATENTSCHRIFT

(11) **EP 2 034 194 B1**
(45) Veröffentlichungstag und Bekanntmachung des Hinweises auf die Patenterteilung: **19.10.2011**
(21) Anmeldenummer: 08163265.5
(22) Anmeldetag: 29.08.2008
(51) Int. Cl.: F16B 7/04

(54) **Verbindungsvorrichtung für Rohrsysteme**
Connection device for pipe systems
Dispositif de liaison pour systèmes de conduites

(30) Priorität: 10.09.2007 CH 14202007
(43) Veröffentlichungstag der Anmeldung: 11.03.2009
(73) Patentinhaber: Kelderer, Heinz, 6300 Zug (CH)
(72) Erfinder: Kelderer, Heinz, 6300 Zug (CH)
(74) Vertreter: Rutz & Partner

(56) Entgegenhaltungen:
- WO-A1-02/099292
- DE-U1- 29 813 772

## Beschreibung

Die Erfindung betrifft eine Verbindungsvorrichtung für Rohrsysteme nach dem Oberbegriff des Patentanspruchs 1.

Möbelstücke, wie Gestelle, Regale und Schränke, weisen oft eine tragende Struktur auf, die durch die Elemente eines Rohrsystems gebildet ist. Derartige Rohrsysteme bestehen aus Hohlrohren, die mittels Kopplungselementen miteinander verbunden sind.

Derartige Rohrsysteme sowie dazugehörige Verbindungsvorrichtungen sind beispielsweise aus [1], EP 0 400 345 A1 bekannt.

In [1] ist ein Verbindungselement offenbart, das im Innenraum eines Rohres festklemmbar uns mit einem angrenzenden Bauteil bzw. einem Kopplungselement verbindbar ist, das seinerseits mittels weiteren Verbindungselementen mit weiteren Rohren verbindbar ist. Dieses Verbindungselement umfasst mindestens zwei schräge Mantelränder aufweisende Hülsen, die mittels eines zentralen Spannelements axial gegeneinander verschiebbar sind, um durch Keilwirkung der schrägen Mantelränder an die Lochinnenseite angepresst zu werden. Die Hülsen sind dabei unverlierbar wenigstens annähernd miteinander fluchtend aneinander gehalten. Beispielsweise sind die Hülsen durch eine gegenseitige Verzahnung aneinander gehalten, welche ein axiales Gegeneinanderbewegen erlaubt und ein axiales Auseinanderbewegen begrenzt. Dieses Verbindungselement verursacht aufgrund der aufwendigen Ausgestaltung der beschriebenen Hülsen einen relativ grossen Herstellungsaufwand. Einerseits ist ein Werkzeug erforderlich, mittels dessen die Hülsen ausgeschnitten und gebogen werden können. Andererseits müssen die aus Metall gefertigten Hülsen unter Berücksichtigung der vorliegenden Verzahnung korrekt zusammengesetzt werden. Noch der Einwirkung mechanischer Kräfte bei der Montage besteht ferner die Gefahr, dass die Hülsen sich verbiegen und bei der Demontage nicht mehr in den Originalzustand zurückkehren. Bei der Demontage und wiederholten Montage des Verbindungselements ist daher mit Schwierigkeiten zu rechnen.

Aus [2], DE 43 16 808 A1 ist eine Verbindungsvorrichtung mit zwei einfacher ausgestalteten Hülsen bekannt, die nicht ineinander eingreifen. Die Hülsen werden aus einem Rohr ausgeschnitten und können somit günstig hergestellt werden. Nachteilig ist allerdings, dass sich die Hülsen bleibend verbiegen können, so dass sie nach der Demontage nicht mehr verwendbar sind. Ferner entwickeln die Hülsen nach der Montage der Verbindungsvorrichtung innerhalb des Rohres nur einen geringen Anpressdruck, der zudem nur im Verbindungsbereich beider Hülsen ausgeprägt ist. Die Stabilität eines mit diesen Verbindungsvorrichtungen montierten Rohrsystems entspricht daher höheren Anforderungen nicht. Ferner ist diese Verbindungsvorrichtung, obwohl sie einfach ausgestaltet ist, nicht so leicht, das heisst, nur mit mehreren Handgriffen montierbar. Insbesondere ist auch zu beachten, dass sich die beiden Hülsen in fehlerhaften Lagen gegenseitig verkeilen können, wonach diese beim Festziehen der Spannschraube deformiert werden.

Aus der WO 02/099292 A1 ist eine der lösbaren Verbindung von Rohren dienende Verbindungsvorrichtung bekannt, die ein in ein Rohr einsetzbares Einsatzelement aufweist, in das eines von mehreren Dornelementen eines Knotenkörpers eingepasst ist, der an das Rohr anschliesst und anhand eines Zugmittels mit dem Einsatzelement verbunden ist. Das Zugmittel, mittels dessen das Einsatzelement gegen das Dornelement gezogen und expandiert wird, umfasst ein innerhalb des Einsatzelements drehfest festgehaltenes Zugelement, welches mit einem länglichen Zuspannelement im Eingriff steht, das einen innerhalb des Knotenkörpers gehaltenen Zugkopf aufweist, der mittels eines Zugspannwerkzeugs betätigt wird, das durch einen Kanal im Knotenkörper eingeführt wird.

Der vorliegenden Erfindung liegt daher die Aufgabe zugrunde, eine verbesserte Verbindungsvorrichtung für Rohrsystem zu schaffen.

Insbesondre ist eine Verbindungsvorrichtung zu schaffen, die kostengünstig herstellbar sowie einfach montierbar und wieder demontierbar ist.

Ferner soll eine Verbindungsvorrichtung geschaffen werden, die nach der Montage innerhalb eines Rohres einen optimalen Anpressdruck über eine grössere Fläche entfaltet.

Weiterhin soll eine Verbindungsvorrichtung geschaffen werden, bei der die einzelnen Vorrichtungsteile auch unter grösserer Krafteinwirkung nicht deformiert und beschädigt werden.

Diese Aufgabe wird mit einer Verbindungsvorrichtung gelöst, welche die in Anspruch 1 angegebenen Merkmale aufweist. Vorteilhafte Ausgestaltungen der Erfindung sind in weiteren Ansprüchen angegeben.

Die Verbindungsvorrichtung, die der lösbaren Spannverbindung wenigstens eines Rohrelements und eines Kopplungselements eines Rohrsystems dient, weist eine Spannschraube auf, die zur Einwirkung auf zueinander komplementäre Elemente vorgesehen ist, mittels derer die Verbindungsvorrichtung innerhalb des Rohrelements verspannt werden kann.

Erfindungsgemäss ist ein aus zwei vorzugsweise identischen Hohlzylindersegmenten bestehendes erstes Hohlzylinderelement vorgesehen, das eine keilförmige Ausnehmung aufweist, die der Aufnahme eines keilförmigen Endstücks eines einteiligen zweiten Hohlzylinderelements dient. Dabei werden das erste und das zweite Hohlzylinderelement, die zueinander komplementär sind, koaxial vom Schaft der Spannschraube durchstossen, welche in eine Gewindebohrung eines mit dem Rohrelement zu verbindenden Kopplungselements eindrehbar ist.

Nach dem Einfügen der Verbindungsvorrichtung in das Rohrelement und nach dem Eindrehen der Spannschraube in die Gewindebohrung des Kopplungselements werden die zu einander komplementären ersten und zweiten Hohlzylinderelemente mit jeder Drehung der Spannschraube näher gegeneinander geführt. Dadurch wird das keilförmige Endstück des zweiten Hohlzylinderelements in die keilförmige Ausnehmung des ersten Hohlzylinderelements geschoben, das mit der anderen Seite entweder am Kopf der Spannschraube oder am Kopplungselement anliegt. Mit dem weiteren Anziehen der Spannschraube drückt das keilförmige Endstück des zweiten Hohlzylinderelements die beiden zueinander komplementären Hohlzylindersegmente des ersten Hohlzylinderelements auseinander gegen einander gegenüberliegende Flächen der Innenwand des Rohrelements.

Die erfindungsgemässe Verbindungsvorrichtung weist verschiedene Vorteile auf. Einerseits werden die Hohlzylindersegmente flächig und mit hoher Kraft an das Rohrelement angedrückt, so dass eine stabile kraftschlüssige Verbindung resultiert.

Die Hohlzylindersegmente des ersten Hohlzylinderelements und das zweite Hohlzylinderelement werden gegebenenfalls aus Metall, vorzugsweise jedoch aus Kunststoff, wie Elastomeren, Thermoplasten oder Duroplasten gefertigt, die weitgehend formbeständig sind und vorzugsweise eine geringe Kompressibilität aufweisen. Die Hohlzylinderelemente weisen vorzugsweise Wanddicken im Bereich von etwa 1/10 bis 1/3 des Innendurchmessers des Rohrelements auf und sind daher äusserst robust. Es wird daher vermieden, dass beim Festziehen der Spannschraube eine Deformation von Vorrichtungsteilen entsteht, wodurch einerseits eine signifikante Reduktion des Anpressdrucks oder eine bleibende Schädigung von Vorrichtungsteilen resultieren könnte. Nach der Demontage der erfindungsgemässen Verbindungsvorrichtung kann diese daher ohne Wartungsmassnahmen wieder verwendet werden.

Eine zumindest ansatzweise formschlüssige Verbindung zwischen der Verbindungsvorrichtung und dem Rohrelement kann vorteilhaft erzielt werden, indem die Innenwand des Rohrelements an dessen Endstücken mit einer Struktur versehen wird, die es den Hohlzylindersegmenten erlaubt, in diese einzudringen. Beispielsweise wird die Innenwand mit kreisförmig verlaufenden Nuten versehen, in die das vorzugsweise elastische Material der Hohlzylindersegmente unter Druck eingepresst wird. Bereits nach minimalem Eindringen von Material der Hohlzylinderelemente in die Struktur der Innenwand des Rohrelements resultiert eine Verbindung, die nur noch durch Zurückdrehen der Spannschraube wieder gelöst werden kann.

Damit die beiden zueinander korrespondierenden Hohlzylindersegmente zusammengehalten werden und unter Druckeinwirkung trotzdem auseinander geschoben werden können, ist in einer vorzugsweisen Ausgestaltung der Erfindung ein elastisches Element vorgesehen, welches die beiden Hohlzylindersegmente zumindest teilweise umfasst und gegeneinander drückt. Beispielsweise sind die Hohlzylindersegmente je mit einer Nut versehen, in die eine ringförmig ausgestaltete Klammer eingesetzt werden kann, welche die Hohlzylindersegmente gegeneinander drückt. Alternativ kann ein die Hohlzylindersegmente umschliessendes Kunststoffband oder eine die Hohlzylindersegmente umschliessende, vorzugsweise schlauchförmige Kunststofffolie vorgesehen sein, die vorzugsweise auch das zweite Hohlzylinderelement umschliesst und somit alle Einzelteile der Verbindungsvorrichtung umfasst und zusammenhält.

Die erfindungsgemässe Vorrichtung besteht daher nicht aus umständlich montierbaren Einzelteilen, sondern kann in Form eines einheitlichen Moduls verwendet werden. Dies ist insbesondere bei Systemen, wie Möbelsystemen, die vom Käufer selbst aufgebaut werden, von entscheidender Bedeutung, da der Käufer die Systeme rasch aufbauen und bei einer Fehlmontage die notwendigen Korrekturen ohne zusätzliche Schwierigkeiten, und insbesondere ohne den Bedarf von Ersatzteilen, durchführen soll.

In einer besonders bevorzugten Ausgestaltung ist das zweite Hohlzylinderelement auf beiden Seiten mit keilförmigen Endstücken versehen, die in die keilförmigen Ausnehmungen von zwei einander entsprechend zugewandten, das zweite Hohlzylinderelement zwischen sich einschliessenden ersten Hohlzylinderelementen eingreifen, die beide koaxial vom Schaft der Spannschraube durchstossen sind. In dieser Ausgestaltung wird bei der montierten Verbindungsvorrichtung, die vorzugsweise symmetrisch aufgebaut ist, daher beidseits des zweiten Hohlzylinderelements ein Anpressdruck und somit eine kraftschlüssige, gegebenenfalls formschlüssige Verbindung durch zwei vorzugsweise identische erste Hohlzylinderelemente erzeugt.

In einer weiteren vorzugsweisen Ausgestaltung weist das durch die beiden Hohlzylindersegmente gebildete erste Hohlzylinderelement auf einer Seite einen vorzugsweise ebene und senkrecht zur Achse der Spannschraube stehende Kreisringfläche auf, an der der Kopf der Spannschraube beziehungsweise das mit der Spannschraube verbundene Kopplungselement anliegt. Die auf der anderen Seite des ersten Hohlzylinderelements vorgesehene keilförmige Ausnehmung weist zwei vorzugsweise gleichförmige Seitenflächen mit gleicher Neigung auf, die sich in einer Linie schneiden, die mit der Längsachse der Spannschraube einen Schnittpunkt bildet.

Die ersten Hohlzylinderelemente und das zweite Hohlzylinderelement werden koaxial von der Spannschraube durchstossen und zumindest seitlich von der Kunststofffolie umfasst. Dabei wird vorzugsweise vorgesehen, dass die ersten Hohlzylinderelemente mit den durch das elastische Element zusammengedrückten Hohlzylinderelementen und das zweite Hohlzylinderelement kraftschlüssig am Schaft der Spannschraube anliegen. Die gesamte Verbindungsvorrichtung wird daher durch die Spannschraube gehalten und kann somit in einfacher Weise in ein Rohrelement eingesetzt werden. Bei der Demontage der Verbindungsvorrichtung kann diese nach dem Lösen der Spannschraube in einfacher Weise entfernt werden.

Aufgrund der Fertigung der vorzugsweise identischen Hohlzylindersegmente des ersten Hohlzylinderelements und der zweiten Hohlzylinderelemente aus Kunststoff kann die Verbindungsvorrichtung mit geringen Kosten produziert werden. Aufgrund der Wiederverwendbarkeit der Verbindungsvorrichtung wird ein Produkt von bleibendem Wert geschaffen.

Nachfolgend wird die Erfindung anhand von Zeichnungen näher erläutert. Dabei zeigt:
- Fig. 1: eine in ein Rohrelement 21 eingesetzte erfindungsgemässe Verbindungsvorrichtung 1, die zwei zweiteilige erste Hohlzylinderelemente 11 und ein dazwischen liegendes einteiliges zweites Hohlzylinderelement 12 aufweist, welche von einer Spannschraube 14 koaxial durchstossen sind, die in eine in einem Kopplungselement 22 vorgesehene Gewindebohrung 221 eingedreht ist;
- Fig. 2: die Verbindungsvorrichtung 1 von Figur 1 nach dem Festziehen der Spannschraube 14;
- Fig. 3: die Verbindungsvorrichtung 1 von Figur 1 mit einer elastischen Folie 130, welche die ersten und zweiten Hohlzylinderelemente 11, 12 umschliesst;
- Fig. 4: die Verbindungsvorrichtung 1 von Figur 3 nach dem Festziehen der Spannschraube 14;
- Fig. 5: die Verbindungsvorrichtung 1 von Figur 1 vor der Montage beziehungsweise nach der Demontage;
- Fig. 6: die Verbindungsvorrichtung 1 von Figur 1 nach dem Eindrehen der Spannschraube 14 in das Kopplungselement 22; und
- Fig. 7: die einzelnen Teile 111, 12, 13 der Verbindungsvorrichtung 1 ohne die Spannschraube 14.

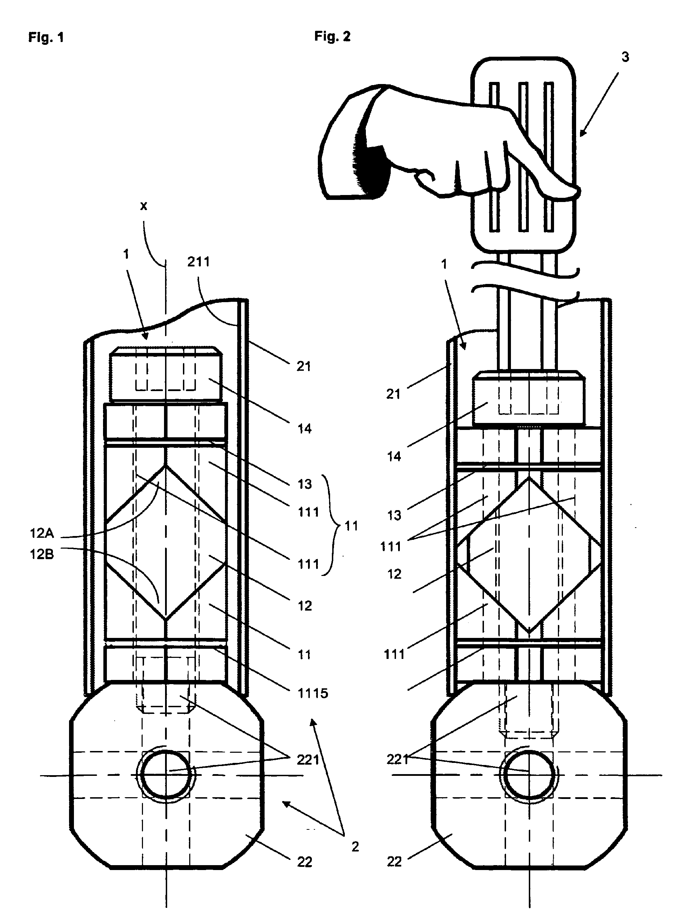

Figur 1 zeigt eine in ein Rohrelement 21 eingesetzte erfindungsgemässe Verbindungsvorrichtung 1 mit einer Spannschraube 14, die in eine Gewindebohrung 221 eines Kopplungselements 22 eingedreht ist. Das Kopplungselement 22 weist die Form eines Würfels auf und ist auf jeder Seite mit einer Gewindebohrung 221 versehen, die zur Aufnahme einer Spannschraube 14 einer Verbindungsvorrichtung 1 vorgesehen ist. Mittels der erfindungsgemässen Verbindungsvorrichtung 1, sowie Rohrelementen 21 und Kopplungselementen 22 kann daher nach Wunsch ein Rohrsystem 2 zusammengebaut werden, welches die tragende Struktur eines Regals, eines Gestells, oder eines Möbels bilden kann.

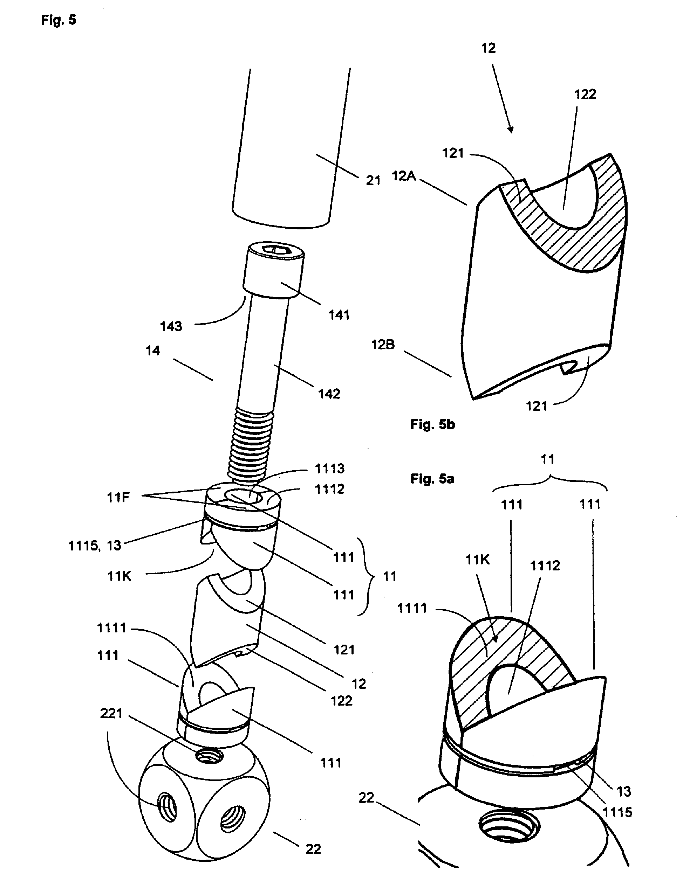

Die erfindungsgemässe Verbindungsvorrichtung 1, die nachstehend auch mit Bezug auf Figur 5 näher erläutert wird, besteht aus zwei zweiteiligen ersten Hohlzylinderelementen 11, wie sie in Figur 5 und Figur 5a gezeigt sind, und einem dazwischen liegenden einteiligen zweiten Hohlzylinderelement 12, welches in Figur 5 und Figur 5b gezeigt ist. Die ersten und zweiten Hohlzylinderelemente 11, 12 sind von der Spannschraube 14 koaxial durchstossen und gehalten, die in die Gewindebohrung 221 des Kopplungselements 22 eindrehbar ist. Die Gewindebohrung 221, das Rohrelement 21, die Spannschraube 14 sowie die ersten und zweiten Hohlzylinderelemente 11, 12 weisen dabei eine gemeinsame Längsachse x auf.

Die beiden ersten Hohlzylinderelemente 11 bestehen je aus zwei identischen Hohlzylindersegmenten 111, die auf einer Seite eine schräg nach innen verlaufende Schnittfläche 1111 und auf der anderen Seite ein Kreisringflächensegment 1112 aufweisen, das senkrecht zur Längsachse x des Hohlzylinderelements 111 steht. Das durch die beiden Hohlzylindersegmente 111 gebildete Hohlzylinderelement 11 weist daher auf der einen Seite eine keilförmige Ausnehmung 11K und auf der anderen Seite eine ebene Kreisringfläche 11F auf, die entweder am Kopf der Spannschraube 14 beziehungsweise am Kopplungselement 22 anliegt.

Das zweite Hohlzylinderelement 12 weist in den gezeigten Ausgestaltungen auf beiden Seiten 12A und 12B eine Keilform mit in gleichen Winkeln gegeneinander geneigten Keilflächen 121 auf, die durch die zentrale Bohrung 122 in gleichem Masse durchstossen sind. Die Neigungen der Keilflächen 121 des zweiten Hohlzylinderelements 12 entsprechen dabei etwa den Neigungen der Kreisringflächensegmente 1112 der Hohlzylindersegmente 111.

Durch eine Verschiebung der ersten Hohlzylinderelemente 11 gegen das zweite Hohlzylinderelement 12, die durch das Festziehen der Spannschraube 14 mittels eines Werkzeugs 3 bewirkt wird, erfolgt daher gleichzeitig eine Verschiebung der Hohlzylindersegmente 111 nach aussen gegen die Innenwand 211 des Rohrelements 21, wie dies in Figur 2 gezeigt ist. Damit eine optimale Verbindung zwischen der Innenwand 211 des Rohrelements 21 und den Hohlzylindersegmenten 111 entsteht, bestehen diese vorzugsweise aus Material, das unter starkem Druck um das erforderliche Mass deformierbar ist. Dadurch wird eine gleichmässige Druckverteilung über die kontaktierte Innenwand 211 des Rohrelements 21 erzielt. Dies ist insbesondere dann von Vorteil, wenn ein wesentlicher Unterschied zwischen dem Aussendurchmesser der ersten Hohlzylinderelemente 11 und dem Innendurchmesser des Rohrelements 21 vorliegt, bei dem nur eine punktuelle Kontaktierung resultieren könnte. Aus Figur 2 ist ersichtlich, dass auch nach dem Festziehen der Spannschraube 14 keine wesentliche beziehungsweise nur die notwendige, jedoch reversible Deformation der Hohlzylindersegmente 111 resultiert, die bewirkt, dass diese über die gesamten Kontaktflächen gleichmässig an die Innenwand 211 des Rohrelements 21 angedrückt werden.

In den Figuren 1 und 2 ist ferner gezeigt, dass die Hohlzylindersegmente 111 mittels elastischer Elemente 13 zusammengehalten werden, welche ringförmig ausgestaltet und in Nuten 1115 gehalten sind, welche ringförmig in die Aussenseiten der Hohlzylindersegmente 111 eingelassen sind.

In Figur 1 ist gezeigt, dass die Hohlzylindersegmente 111 mittels der elastischen Elemente 13 gegen den Schaft 142 der Spannschraube 14 gedrückt werden, so dass eine kraftschlüssige Verbindung zwischen den Hohlzylindersegmenten 111 und dem Schaft 142 der Spannschraube 14 resultiert. Die Verbindungsvorrichtung 1 kann daher in einfacher Weise montiert werden, indem die Spannschraube 14 erfasst und mit den daran befestigten Hohlzylinderelementen 11, 12 in das Rohrelement 21 eingeführt wird.

In Figur 2 ist gezeigt, dass die Hohlzylindersegmente 111 durch die keilförmigen Endstücke 12A, 12B des zweiten Hohlzylinderelements 12 paarweise auseinander gegen die Innenwand 211 des Rohrelements 21 geschoben wurden, wodurch das elastische Element 13 entsprechend gedehnt wurde. Sobald die Spannschraube 14 wieder gelöst wird, werden die Hohlzylindersegmente 111 durch das zugehörige elastische Elemente 13 wieder zusammen gegen den Schaft 142 der Spannschraube 14 gedrückt, so das die Verbindungsvorrichtung 1 in einfacher Weise auch wieder entfernt werden kann, indem die Spannschraube 14 erfasst und aus dem Rohrteil 21 entfernt wird. Die Handhabung der erfindungsgemässen Verbindungsvorrichtung 1 bei der Montage und der Demontage ist daher ausserordentlich einfach. Mit einem Werkzeug 3, das an den Kopf 142 der Spannschraube 14 angepasst ist und diesen halten kann, kann die Verbindungsvorrichtung 1 leicht in das Rohrelement 13 eingeführt und ausser diesem wieder entnommen werden.

Eine besonders gute Verbindung zwischen der montierten Verbindungsvorrichtung 1 und dem Rohrelement 21 wird erzielt, indem die Oberflächenbeschaffenheit der Hohlzylindersegmente 111 und/oder der Innenwand 211 an den Endstücken der Rohrelemente 21 derart gewählt wird, dass beim Festziehen der Spannschraube 14 zumindest ansatzweise eine formschlüssige Verbindung der Hohlzylindersegmente 111 mit der Innenwand 211 des Rohrelements 21 entsteht.

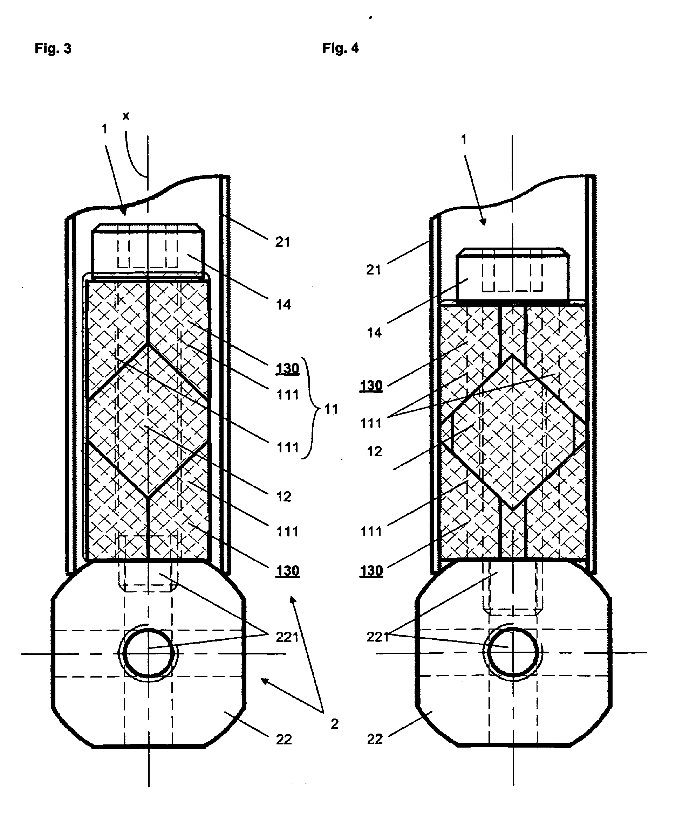

Die Figuren 3 und 4 zeigen die Verbindungsvorrichtung 1 in einer vorzugsweisen Ausgestaltung, bei der anstelle ringförmiger elastischer Elemente 13 eine elastische Folie oder ein elastischer Schlauch 130 vorgesehen ist, welcher die Hohlzylinderelemente 11, 12 umfasst und die Hohlzylindersegmente 111 gegen den Schaft 142 der Spannschraube 14 drückt. Die Hohlzylinderelemente 11, 12 werden durch die elastische Folie oder den elastischen Schlauch 130 daher in Bezug auf die Längsachse x koaxial zueinander ausgerichtet gehalten, so dass die Spannschraube 14 problemlos eingeführt werden kann und anschliessend kraftschlüssig gehalten wird. In dieser Ausgestaltung ist die Verbindungsvorrichtung 1 daher besonders leicht handhabbar. Ferner reduziert sich der Herstellungsaufwand, da die Hohlzylindersegmente 111 nicht mit Nuten versehen werden müssen. Ein elastischer Schlauch 130 kann dabei besonders einfach aufgebracht werden, indem dieser über die Hohlzylinderelemente 11, 12 gestülpt und anschliessend vorzugsweise thermisch geschrumpft wird.

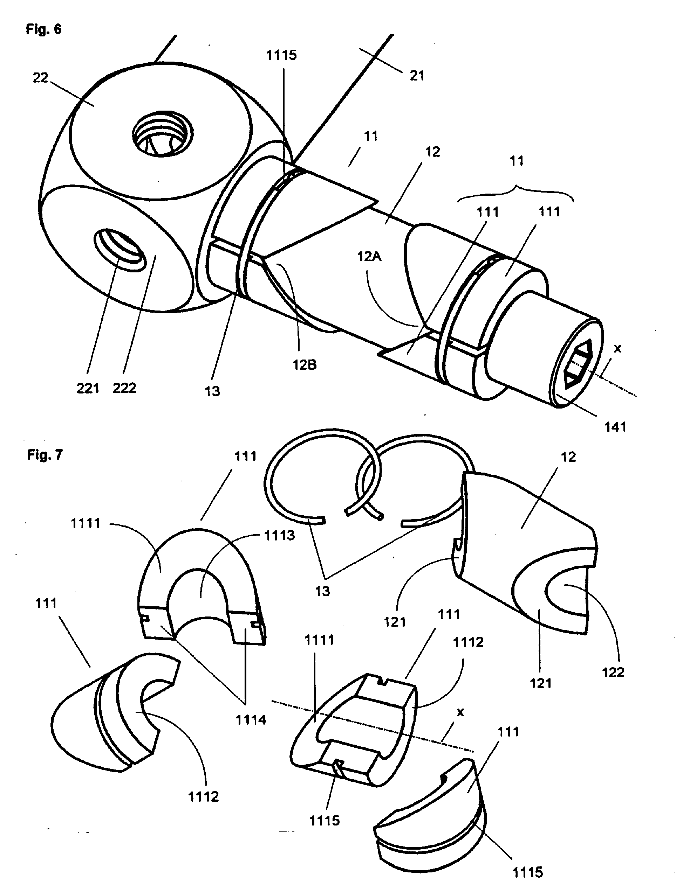

Figur 6 zeigt die Verbindungsvorrichtung 1 von Figur 1 nach dem Eindrehen der Spannschraube 14 in das Kopplungselement 22 und nach dem Entfernen des Rohrelements 21. Es ist gezeigt, dass die Spannschraube 14 bereits soweit fest gezogen wurde, dass die keilförmigen Enden 12A, 12B des zweiten Hohlzylinderelements 12 zwischen die beiden zueinander entsprechenden Hohlzylindersegmente 111 der ersten Hohlzylinderelemente 11 eingedrungen sind und diese auseinander verschoben haben. Ferner ist ersichtlich, dass die Hohlzylindersegmente 111 parallel zur Längsachse x der Verbindungsvorrichtung 1 ausgerichtet bleiben und auf ebenen Flächen 143, 222 der Spannschraube 14 und des Kopplungselements 22 parallel nach aussen gleiten. Die Hohlzylindersegmente 111 werden daher parallel anliegend an die Innenwand 211 des Rohrelements 21 angedrückt, nachdem dieses montiert wurde. Aus Figur 6 ist ferner der modulare Charakter der Verbindungsvorrichtung 1 ersichtlich. Nach der in Figur 6 gezeigten Montage der Verbindungsvorrichtung 1 ist diese fest gehalten. Es können daher vorab sechs Verbindungsvorrichtungen 1 mit dem Kopplungselement 22 verbunden und erst anschliessend die Rohrelemente 21 fixiert werden.

Figur 7 zeigt die einzelnen Teile 111, 12, 13 der Verbindungsvorrichtung 1 ohne die Spannschraube 14. In dieser Darstellung sind die elastischen Elemente 13, die in Form unterbrochener Metall- oder Kunststoffringe vorliegen, sowie die vereinzelten Hohlzylindersegmente 111 mit den eingeformten Nuten 1115, den auf einer Seite schräg nach aussen verlaufenden Keilflächen 1111 und den auf der anderen Seite senkrecht zur Längsachse x stehenden Ringssegmentflächen 1112 gut ersichtlich.
Literaturverzeichnis
[1] EP 0 400 345 A1
[2] DE 43 16 808 A1

## Patentansprüche

1. Verbindungsvorrichtung (1) zur lösbaren Spannverbindung wenigstens eines Rohrelements (21) und eines Kopplungselements (22) eines Rohrsystems (2), mit einer Spannschraube (14), die zur Einwirkung auf zueinander komplementäre Verbindungselemente (11, 12) vorgesehen ist, mittels derer die Verbindungsvorrichtung (1) innerhalb des Rohrelements (21) verspannt werden kann, **dadurch gekennzeichnet, dass** zwei erste Hohlzylinderelemente (11) vorgesehen sind, die je aus zwei vorzugsweise identischen Hohlzylindersegmenten (111) bestehen und je eine keilförmige Ausnehmung (11K) aufweisen, die einander zugewandt sind und je ein zugewandtes erstes bzw. zweites keilförmiges Endstück (12A; 12B) eines einteiligen zweiten Hohlzylinderelements (12) aufnehmen, wobei die beiden ersten Hohlzylinderelemente (11) und das dazwischen liegende zweite Hohlzylinderelement (12) koaxial ausgerichtet und vom Schaft (142) der Spannschraube (14) durchstossen sind, welche in eine Gewindebohrung (221) eines mit dem Rohrelement (21) zu verbindenden Kopplungselements (22) eingedreht ist, welches die Form eines Würfels aufweist, der auf jeder Seite mit einer Gewindebohrung (221) versehen ist, wodurch der Kopf (141) der Spannschraube (14) und das Kopplungselement (22) auf gegenüberliegenden Seiten je an einem der ersten Hohlzylinderelemente (11) anliegen.

2. Verbindungsvorrichtung (1) nach Anspruch 1, **dadurch gekennzeichnet, dass** die zwei Hohlzylindersegmente (111) mittels eines elastischen Elementes, vorzugsweise mittels einer in Nuten (1115) der Hohlzylindersegmente (111) gehaltenen, ringförmig ausgestalteten Klammer (13), einem die Hohlzylindersegmente (111) umschliessenden Kunststoffband, oder einer die Hohlzylindersegmente (111) umschliessenden vorzugsweise schlauchförmigen Kunststofffolie (130), aneinander gedrückt sind.

3. Verbindungsvorrichtung (1) nach Anspruch 1 oder 2, **dadurch gekennzeichnet, dass** das Kopplungselement (22) teilweise abgerundet ist.

4. Verbindungsvorrichtung (1) nach Anspruch 1, 2 oder 3, **dadurch gekennzeichnet, dass** das erste Hohlzylinderelement (11) auf einer Seite einen vorzugsweise ebene und senkrecht zur Achse der Spannschraube (14) stehende Kreisringfläche aufweist, an der der Kopf (141) der spannschraube (14) anliegt und dass die auf der anderen Seite des ersten Hohlzylinderelements (11) vorgesehene keilförmige Ausnehmung (11K) zwei gleichförmige Seitenflächen (1111) mit gleicher Neigung aufweist, die sich in einer Linie schneiden, die mit der Achse der Spannschraube (14) einen Schnittpunkt bildet.

5. Verbindungsvorrichtung (1) nach einem der Ansprüche 1-4, **dadurch gekennzeichnet, dass** die ersten Hohlzylinderelemente (11) und das zweite Hohlzylinderelement (12) koaxial von der Spannschraube (14) durchstossen und zumindest seitlich von der Kunstotofffolie (130) umfasst sind.

6. Verbindungsvorrichtung (1) nach einem der Ansprüche 1-5, **dadurch gekennzeichnet, dass** die Hohlzylindersegmente (111) des ersten Hohlzylinderelements (11) und das zweite Hohlzylinderelement (12) aus Kunststoff gefertigt sind und vorzugsweise wanddicken im Bereich von etwa 1/10 bis 1/3 des Innendurchmessers des Rohrelements (21) aufweisen.

7. Verbindungsvorrichtung (1) nach einem der Ansprüche 1-6, **dadurch gekennzeichnet, dass** die Oberflächenbeschaffenheit der Hohlzylindersegmente (111) und/oder der Innenwand (211) der Rohrelemente (21) derart gewählt ist, dass beim Festziehen der Spannschraube 114) eine zumindest ansatzweise formschlüssige Verbindung der Hohlzylindersegmente (111) mit der Innenwand (211) des Rohrelements (21) entsteht.

8. Verbindungsvorrichtung (1) nach einem der Ansprüche 1-7, **dadurch gekennzeichnet, dass** der Durchmesser des Schafts (142) der Spannschraube (14) zumindest annähernd dem Durchmesser der der Innenbohrung der ersten und/oder zweiten Hohlzylinderelemente (11, 12) entspricht.

9. Verbindungsvorrichtung (1) nach Anspruch 8, **dadurch gekennzeichnet, dass** zwischen den ersten und/oder zweiten Hohlzylinderelementen (11, 12) und dem eingesetzten Schaft (142) der Spannschraube (14) eine krafzschlüssige Verbindung besteht.

10. Verbindungsvorrichtung (1) nach Anspruch 8, **dadurch gekennzeichnet, dass** das elastische Element (130) thermisch geschrumpft ist.

## Claims

1. Connecting device (1) for the releasable clamping connection of at least one tubular element (21) and at least one coupling element (22) of a tubular system (2), with a clamping screw (14), which is provided provided for acting on mutually complementary elements (11, 12), by which the connecting device (1) can be tightened within the tubular element (21), **characterised in, that** two primary hollow cylindrical elements (11) are provided, each consisting of two preferably identical hollow cylindrical segments (111) and each exhibiting a wedge-shaped recess (11K), facing one another and accommodating a neighbouring first or second wedge-shaped end piece (12A; 12B) of a secondary hollow cylindrical segment (12) that is made of one piece, wherein the two primary hollow cylindrical elements (11) and the secondary hollow cylindrical element (12) lying there between are coaxially aligned and traversed by the shaft (142) of the clamping screw (14), which is drilled into a threaded hole (221) of a coupling element (22) that is to be connected to the tubular element (21), which coupling element (22) comprises the form of a cube, which is provided on every side with a threaded hole (221), whereby the head (141) of the clamping screw (14) and the coupling element (22) lie each on opposite sides on primary hollow cylindrical elements (11).

2. Connecting device (1) according to claim 1, **characterised in, that** the two hollow cylindrical segments (111) are pressed against one another by means of elastic elements, preferably by means of a ring-shaped clamp (13) that is held in grooves of the hollow cylindrical segments (111), by a plastic ribbon enclosing the hollow cylindrical segments (111), or by means of a tubular plastic film enclosing the hollow cylindrical segments (111).

3. Connecting device (1) according to claim 1 or 2, **characterised in, that** the coupling element (22) is partially rounded.

4. Connecting device (1) according to claim 1, 2 or 3, **characterised in, that** the primary hollow cylindrical element (11) exhibits on one side an annular surface, which is preferably plane and standing perpendicularly to the axis of the clamping screw (14) and on which the head (141) of the clamping screw (14) is lying, and that the wedge-shaped recess (11K) provided on the other side of the primary hollow cylindrical element (11) exhibits two uniform side surfaces (1111) having the same inclination, intersecting in a line that forms an intersecting point with the axis of the clamping screw (14).

5. Connecting device (1) according to one of the claims 1-4, **characterised in, that** the primary hollow cylindrical elements (11) and the secondary hollow cylindrical element (12) are traversed coaxially by the clamping screw (14) and at least laterally embraced by the plastic film (130).

6. Connecting device (1) according to one of the claims 1-5, **characterised in, that** the hollow cylindrical segments (111) of the primary hollow cylindrical segment (11) and the secondary hollow cylindrical element (12) are made from plastic and preferably exhibit wall thicknesses in the range from approximately 1/10 to 1/3 of the inner diameter of the tubular element (21).

7. Connecting device (1) according to one of the claims 1-6, **characterised in, that** the surface quality of the hollow cylindrical segments (111) and/or of the inner wall (211) of the tubular elements (21) is selected such a way, that by fastening the clamping screw (14) and at least partially form-locking connection between the hollow cylindrical segments (111) and the inner wall (211) of the tubular element (21) results.

8. Connecting device (1) according to one of the claims 1-7, **characterised in, that** the diameter of the shaft (142) of the clamping screw (14) corresponds at least approximately to the diameter of the inner bore of the primary and/or secondary hollow cylindrical elements (11, 12).

9. Connecting device (1) according to claim 8, **characterised in, that** between the primary and/or the secondary hollow cylindrical elements (11, 12) and the introduced shaft (142) of the clamping screw (14) a force locking connection exists.

10. Connecting device (1) according to claim 8, **characterised in, that** the elastic element (130) is thermally shrunk.

## Revendications

1. Dispositif de connexion (1) pour la connexion amovible de serrage d'au moins un élément de tuyau (21) et d'un élément d'accouplement (22) d'un système de tuyauterie (2), avec une vis de serrage (14), qui est prévue pour agir sur des éléments de connexion (11, 12) complémentaires au moyen desquels le dispositif de connexion (1) peut être serré à l'intérieur de l'élément de tuyau (21), **caractérisé en ce qu'**il est prévu deux premiers éléments cylindriques creux (11) qui se composent respectivement de deux segments cylindriques creux de préférence identiques (111) et présentent respectivement un évidement cunéiforme (11K) qui sont tournés l'un vers l'autre et logent chacun une première pièce d'extrémité ou une seconde pièce d'extrémité cunéiforme (12A; 12B) respectivement d'un second élément cylindrique creux (12) d'une seule pièce, les deux premiers éléments cylindriques creux (11) et le second élément cylindrique creux intercalé (12) étant orientés coaxialement et traversé par la tige (142) de la vis de serrage (14), vis qui est vissée dans un alésage fileté (221) d'un élément d'accouplement (22) à relier à l'élément de tuyau (21), élément d'accouplement qui présente la forme d'un cube qui est muni sur chaque face d'un alésage fileté (221), la tête (141) de la vis de serrage (14) et l'élément d'accouplement (22) étant appliqués respectivement sur des faces opposées chacune contre l'un des premiers éléments cylindriques creux (11).

2. Dispositif de connexion (1) selon la revendication 1, **caractérisé en ce que** les deux segments cylindriques creux (111) sont pressés l'un contre l'autre au moyen d'un élément élastique, de préférence au moyen d'une pince (13) de forme annulaire maintenue dans des rainures (1115), d'une bande de matière plastique entourant les segments cylindriques creux (111) ou d'une feuille de matière plastique (130) tubulaire, de préférence entourant les segments cylindriques creux (111).

3. Dispositif de connexion (1) selon la revendication 1 ou 2, **caractérisé en ce que** l'élément d'accouplement (22) est partiellement arrondie.

4. Dispositif de connexion (1) selon la revendication 1, 2 ou 3, **caractérisé en ce que** le premier élément cylindrique creux (11) présente sur un côté une surface circulaire annulaire de préférence plane et perpendiculaire à l'axe de la vis de serrage (14), surface contre laquelle la tête (141) de la vis de serrage (14) prend appuie et **en ce que** l'évidement (11K) cunéiforme prévu de l'autre côté du premier élément cylindrique creux (11) présente deux surfaces latérales uniformes (1111) avec une inclinaison identique et se coupe dans une ligne qui forme avec l'axe de la vis de serrage (14) un point d'intersection.

5. Dispositif de connexion (1) selon l'une des revendications 1 à 4, **caractérisé en ce que** les premiers éléments cylindriques creux (11) et le second élément cylindrique creux (12) sont traversé coaxialement par la vis de serrage (14) et sont au moins latéralement entourés par la feuille de matière plastique (130).

6. Dispositif de connexion (1) selon l'une des revendications 1 à 5, **caractérisé en ce que** les segments cylindriques creux (111) du premier élément cylindrique creux (11) et le second élément cylindrique creux (12) sont fabriqués à partir de matière plastique et présentent de préférence des épaisseurs de paroi comprises entre environ 1/10 et 1/3 du diamètre interne de l'élément de tuyau (21).

7. Dispositif de connexion (1) selon l'une des revendications 1 à 6, **caractérisé en ce que** la propriété de surface des segments cylindriques creux (111) et/ou de la paroi interne (211) des éléments tubulaires (21) est sélectionnée de sorte que lors du serrage de la vis de serrage (14), il est établi une connexion à adhérence de forme entre des segments cylindriques creux (111) et la paroi interne (211) de l'élément tubulaire (21).

8. Dispositif de connexion (1) selon l'une des revendications 1 à 7, **caractérisé en ce que** le diamètre de la tige (142) de la vis de serrage (14) correspond au moins approximativement au diamètre des premier et/ou second éléments cylindriques creux (11, 12).

9. Dispositif de connexion (1) selon la revendication 8, **caractérisé en ce qu'**entre les premier et/ou second éléments cylindriques creux (11, 12) et la tige (142) insérée, de la vis de serrage (14), il existe une connexion par adhérence de forme.

10. Dispositif de connexion (1) selon la revendication 8, **caractérisé en ce que** l'élément élastique (130) est rétracté thermiquement.
